# EUROPÄISCHE PATENTANMELDUNG

(11) **EP 4 000 711 A1**
(43) Veröffentlichungstag der Anmeldung: **25.05.2022**
(21) Anmeldenummer: 21208368.7
(22) Anmeldetag: 16.11.2021
(51) Int. Cl.: B01D 46/00, B01D 39/20, B01D 46/24, B01D 46/84

(54) **VAKUUMVORRICHTUNG MIT EINEM SINTERMETALL-TASCHENFILTER**

(30) Priorität: 17.11.2020 DE 102020214439
(71) Anmelder: Diener, Christof-Herbert, 72202 Nagold (DE)
(72) Erfinder: Diener, Christof-Herbert, 72202 Nagold (DE)
(74) Vertreter: Kohler Schmid Möbus Patentanwälte

(57) **Zusammenfassung**

Die Erfindung betrifft eine Vakuumvorrichtung (10) mit einer Vakuumkammer (12) und einer Vakuumpumpe (14) zur Evakuierung der Vakuumkammer (12). Die Vakuumvorrichtung (10) kann einen Plasmagenerator (28) aufweisen, um Behandlungsgut (16) in der Vakuumkammer (12) mit einem Plasma behandeln zu können. Der Vakuumpumpe (14) ist ein Abgaspartikelfilter (18) vorgeschaltet, um die Vakuumpumpe (14) vor aggressiven Reagenzien aus der Vakuumkammer (12) zu schützen. Der Abgaspartikelfilter (18) weist ein Filterelement (20) mit einer Vielzahl von Sintermetallfiltertaschen auf. Die Sintermetallfiltertaschen sind vorzugsweise jeweils aus zwei spitz zulaufenden gesinterten Metallblechstreifen ausgebildet. Das Filterelement (20) kann als Elektrode (30) des Plasmagenerators (28) mit dem Plasmagenerator (28) verbunden sein. Die Erfindung betrifft weiterhin die Verwendung eines Abgaspartikelfilters (18) mit Sintermetallfiltertaschen zum Schutz einer Vakuumpumpe (14).

## Beschreibung

### Hintergrund der Erfindung

Die Erfindung betrifft eine Vakuumvorrichtung gemäß dem Oberbegriff des Patentanspruchs 1. Die Erfindung betrifft weiterhin eine Verwendung eines Abgaspartikelfilters gemäß dem Oberbegriff des Patentanspruchs 12.

In Vakuumkammern - mit oder ohne Plasmaquelle - kann durch eine Vakuumpumpe ein Unterdruck erzeugt werden. Derlei Vakuumkammern sind aus dem Buch "Handbuch der Plasma Oberflächen Technik" des Erfinders unter der ISBN 978-3-9822206-0-4 bekannt geworden. Es ist weiterhin bekannt, Vakuumpumpen vor angesaugten Stoffen, insbesondere Gase und Partikel, zu schützen. Beispielsweise ist es aus der DE 10 2014 016 380 A1 bekannt geworden, abgesaugte Gase einer Plasmaquelle zuzuführen, um eine Vakuumpumpe zu schützen.

Die bekannten Vorrichtungen zum Schutz von Vakuumpumpen sind jedoch oftmals konstruktiv aufwändig und/oder nur sehr schwer reinigbar.

### Aufgabe der Erfindung

Es ist daher Aufgabe der Erfindung, einen konstruktiv einfachen, aber effektiven Schutz einer Vakuumpumpe bereit zu stellen.

### Beschreibung der Erfindung

Diese Aufgabe wird erfindungsgemäß gelöst durch eine Vakuumvorrichtung gemäß Patentanspruch 1 und ein Verfahren gemäß Patentanspruch 12. Die Unteransprüche geben bevorzugte Weiterbildungen wieder.

Die erfindungsgemäße Aufgabe wird somit durch eine Vakuumvorrichtung mit einer Vakuumkammer zur Behandlung von Behandlungsgut, einer Vakuumpumpe und einem der Vakuumpumpe vorgeschalteten Abgaspartikelfilter gelöst, wobei der Abgaspartikelfilter ein Filterelement mit mehreren Sintermetallfiltertaschen aufweist.

Derlei Filtertaschen weisen verbundene, gesintertes Metall aufweisende Flächen auf. Die Sintermetallfiltertaschen sind kostengünstig herstellbar und dennoch sehr widerstandsfähig, sodass sie bei hohen Temperaturen und/oder mit aggressiven chemischen Substanzen reinigbar sind. Darüber hinaus halten Sintermetallfiltertaschen sehr effizient Kleinstpartikel zurück. Mit Natronlauge können beispielsweise siliziumorganische Verunreinigungen ( z.B. SiOx) entfernt werden. Ohne Ausbau des Filterelements kann dieser auch wieder von siliziumorganischen Verbindungen mit fluorhaltigen Plasma gereinigt werden.

Die Sintermetallfiltertaschen bestehen vorzugsweise aus zwei gesinterten Blechstreifen, die stirnseitig verbunden, insbesondere verschweißt oder verlötet, sind.

Die Metallblechstreifen sind vorzugsweise jeweils aus einem mit Öffnungen versehenen Träger ausgebildet, wobei Sintermetallpartikel in die Öffnungen eingebracht sind.

Die Träger können ein Skelett aus Metall, insbesondere aus Streckmetall, aufweisen, in dem die Sintermetallpartikel eingebracht sind. Das Skelett kann mehrere Stege aufweisen. Das Skelett kann in Form eines Drahtgitters ausgebildet sein, dessen Öffnungen bzw. Poren mit Sintermetallpartikeln gefüllt sind. Das Skelett verleiht den Metallblechstreifen die erforderliche Stabilität. Dabei können die Metallblechstreifen entsprechend dünn ausgebildet sein, sodass ein großer Volumenstrom durch das Filterelement leitbar ist.

Die Sintermetalltaschenfilter können ein Skelett aus Streckmetall und/oder Drahtgewebe aufweisen. Die Sintermetalltaschenfilter können dünnwandig ausgebildet sein. Sie weisen vorzugsweise eine Wandstärke (Wanddicke) von weniger als 1,5mm, insbesondere weniger als 1mm, besonders bevorzugt von weniger als 0,5mm, auf.

Die beiden Metallblechstreifen können gleichartig, insbesondere gleich, ausgebildet sein. Besonders bevorzugt sind die Sintermetallfiltertaschen V-förmig ausgebildet.

Eine sehr robuste und konstruktiv einfache Ausgestaltung wird erzielt, wenn das Filterelement in Form eines radial durchströmbaren Rundfilterelements mit im Querschnitt sternförmig angeordneten Sintermetallfiltertaschen ausgebildet ist. Die Sintermetallfiltertaschen können dabei axial zumindest einenends, insbesondere beidenends, durch eine Endscheibe des Filterelements gefasst sein.

Die Sintermetallfiltertaschen können zum Zurückhalten von Partikeln mit einer Größe von weniger als 1,5µm, insbesondere von weniger als 1µm, vorzugsweise von weniger als 0,5µm, ausgebildet sein. Hierdurch kann ein sehr effektiver Schutz der Vakuumpumpe erreicht werden.

In weiter bevorzugter Ausgestaltung der Erfindung ist das Filterelement, insbesondere ohne Filtergehäuse, platzsparend im Inneren der Vakuumkammer angeordnet.

Die Vakuumvorrichtung kann einen Plasmagenerator aufweisen. Der Plasmagenerator kann elektrisch mit dem Filterelement verbunden sein, sodass das Filterelement als Elektrode des Plasmagenerators einsetzbar ist.

Ein Plasmagenerator kann zur Erzeugung eines Plasmas in der Vakuumkammer zur Plasmabehandlung des Behandlungsguts vorgesehen sein. Bei dem Plasmagenerator kann es sich um den elektrisch mit dem Filterelement verbundenen Plasmagenerator oder einen anderen Plasmagenerator handeln.

Eine Elektrode des Plasmagenerators kann, insbesondere lanzenförmig ausgebildet, zur Einführung in ein zu behandelndes Behältnis ausgebildet sein. Die Vakuumvorrichtung ist dabei vorzugsweise zur Behandlung, insbesondere Plasmabehandlung, eines Behältnisses in Form einer Flasche und/oder zur Behandlung eines Behältnisses in Form eines Bechers ausgebildet.

Die Elektrode kann eine Durchgangsöffnung aufweisen, sodass sie als Medienzuführung oder Medienabführung durch die Elektrode einsetzbar ist.

Die Vakuumvorrichtung kann eine Heizquelle zum Ausheizen des Filterelements aufweisen. Hierdurch wird auf einfache Art und Weise eine regelmäßige Regenerierung des Filterelements ermöglicht.

Zur Ausscheidung von gefilterten Rückständen kann die Vakuumvorrichtung ein Belüftungsventil aufweisen, das zwischen dem Abgaspartikelfilter und der Vakuumpumpe angeordnet ist. Das Belüftungsventil sorgt dafür, dass unerwünschter Rückstand in die Vakuumkammer zurückkommt. Dort kann er dann leicht mit einem Staubsauger entfernt werden. Das ist vor allem bei Pulverbehandlungsanlagen vorteilhaft.

Die Erfindung betrifft weiterhin die Verwendung eines Abgaspartikelfilters in einer Vakuumvorrichtung, wobei der Abgaspartikelfilter ein Filterelement mit mehreren Sintermetallfiltertaschen aufweist und der Abgaspartikelfilter zwischen einer Vakuumkammer und einer Vakuumpumpe angeordnet ist. Die Vakuumvorrichtung kann wie zuvor beschrieben ausgebildet sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine schematische Darstellung einer ersten Ausführungsform einer erfindungsgemäßen Vakuumvorrichtung mit einem einer Vakuumpumpe vorgeordneten Abgaspartikelfilter.
- Fig. 2: zeigt eine schematische Darstellung einer zweiten Ausführungsform einer erfindungsgemäßen Vakuumvorrichtung mit einem in einer Vakuumkam-mer angeordneten Filterelement.
- Fig. 3: zeigt eine schematische Darstellung eines Teils einer erfindungsgemäßen Vakuumvorrichtung mit einem Filterelement, an dem ein Plasma zündbar ist.
- Fig. 4a: zeigt eine isometrische Darstellung eines erfindungsgemäß eingesetzten Filterelements.
- Fig. 4b: zeigt eine Schnittdarstellung eines Teils des Filterelements aus Fig. 4a.
- Fig. 4c: zeigt eine Schnittansicht eines Teils des Filterelements aus Fig. 4b.
- Fig. 5: zeigt eine schematische Darstellung einer erfindungsgemäßen Vakuum-vorrichtung zur Plasmabehandlung des Innenbereichs eines flaschenför-migen Behältnisses.
- Fig. 6: zeigt eine schematische Darstellung einer weiteren erfindungsgemäßen Vakuumvorrichtung zur Plasmabehandlung des Innenbereichs eines be-cherförmigen Behältnisses.

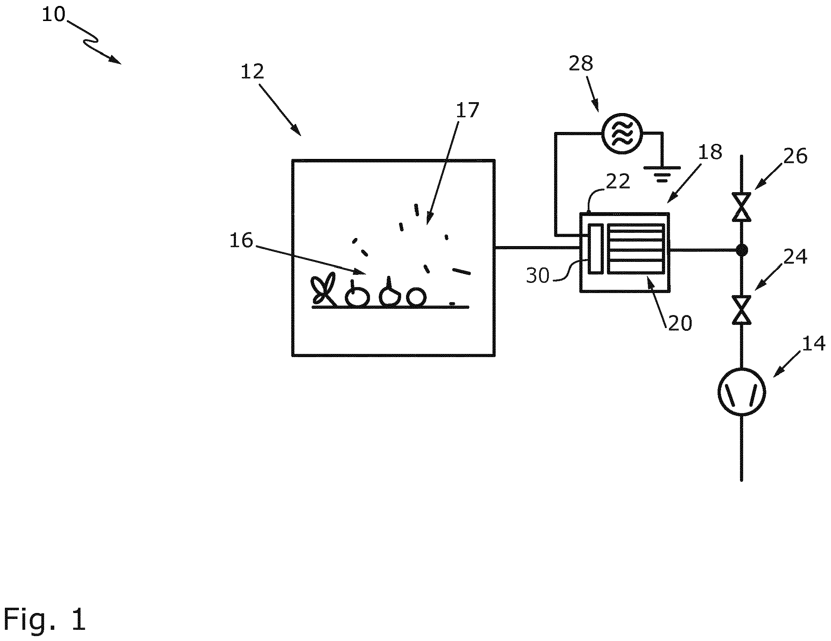

**Fig. 1** zeigt eine Vakuumvorrichtung **10** mit einer Vakuumkammer **12** und einer Vakuumpumpe **14.** Behandlungsgut **16** kann in der Vakuumkammer 12 behandelt, insbesondere getrocknet werden. Bei der Behandlung des Behandlungsguts 16 werden auch unerwünschte Stoffe erzeugt bzw. verbleiben unerwünschte Stoffe in der Vakuumkammer 12. Diese Stoffe können insbesondere in Form von Partikeln **17** vorliegen. Zwischen Vakuumkammer 12 und Vakuumpumpe 14 ist daher erfindungsgemäß ein Abgaspartikelfilter **18** angeordnet. Der Abgaspartikelfilter 18 dient als Schutz der Vakuumpumpe 14 vor aus der Vakuumkammer 12 abgesaugten Stoffen. Der Abgaspartikelfilter 18 weist ein Filterelement **20** und ein Filtergehäuse **22** auf. Das Filterelement 20 ist vorzugsweise austauschbar im Filtergehäuse 22 angeordnet.

Der Vakuumpumpe 14 kann ein Pumpenventil **24** vorgeschaltet sein. Alternativ oder zusätzlich dazu kann zwischen dem Abgaspartikelfilter 18 und der Vakuumpumpe 14 ein Belüftungsventil **26** angeordnet sein. Über das Belüftungsventil 26 können unerwünschte Stoffe vor der Vakuumpumpe 14 ausgeschieden werden.

Die Vakuumvorrichtung 10 kann einen Plasmagenerator **28** aufweisen. Der Plasmagenerator 28 kann mit einer Elektrode **30** im Innenraum des Filtergehäuses 22 verbunden sein, sodass im Innenraum des Filtergehäuses 22 ein Plasma zündbar ist. Das Plasma kann vor, während und/oder nach der Vakuumbehandlung des Behandlungsguts 16 gezündet werden. Das Plasma kann die Vakuumpumpe 14 vor unerwünschten Stoffen schützen und/oder zur Reinigung des Filterelements 20 eingesetzt werden.

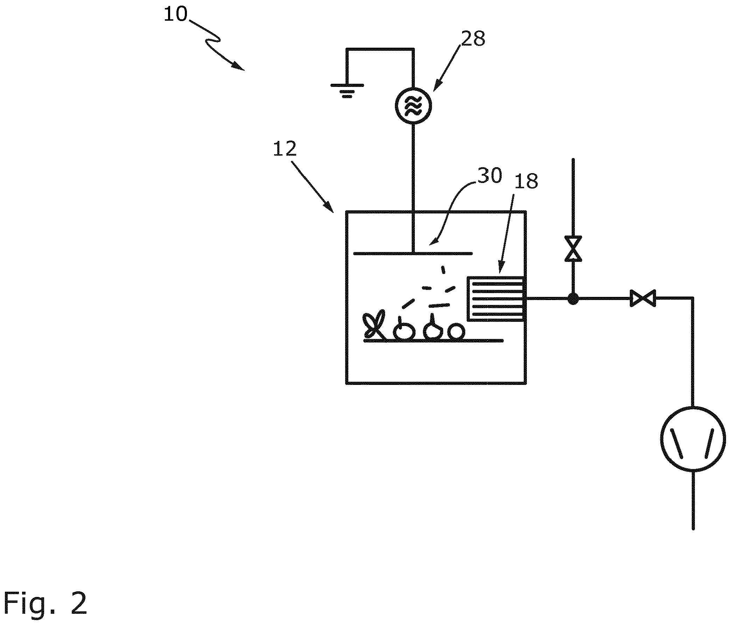

**Fig. 2** zeigt eine weitere Vakuumvorrichtung 10. Die Vakuumvorrichtung 10 weist einen Plasmagenerator 28 auf, der, insbesondere durch eine Elektrode 30, dazu ausgebildet ist, ein Plasma in einer Vakuumkammer 12 zu zünden. Aus Fig. 2 ist ersichtlich, dass ein Abgaspartikelfilter 18 im Inneren der Vakuumkammer 12 angeordnet ist.

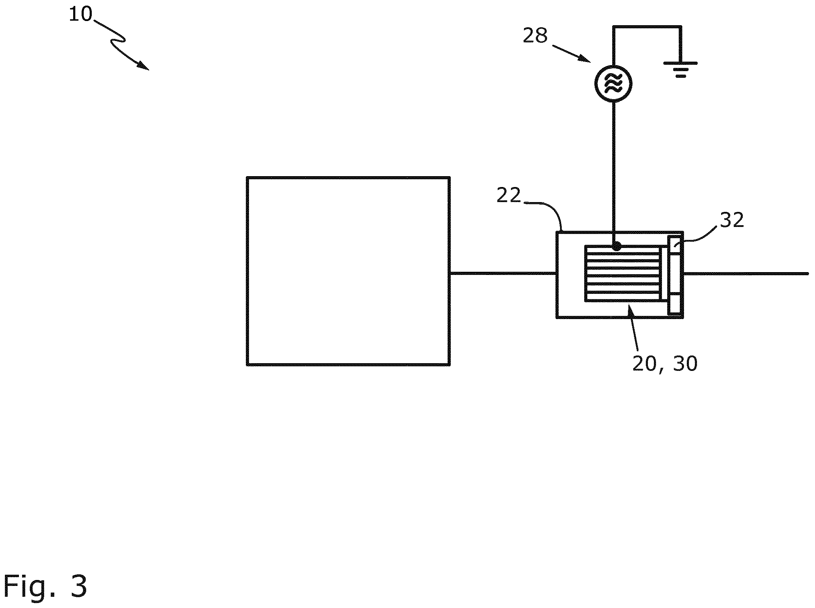

**Fig. 3** zeigt einen Teil einer weiteren Vakuumvorrichtung 10, bei der ein Filterelement 20 als Elektrode 30 eines Plasmagenerators 28 dient. Ein Isolator **32** kann im Inneren eines Filtergehäuses 22 vorgesehen sein, um das Filterelement 20 gegenüber dem Filtergehäuse 22 zu isolieren.

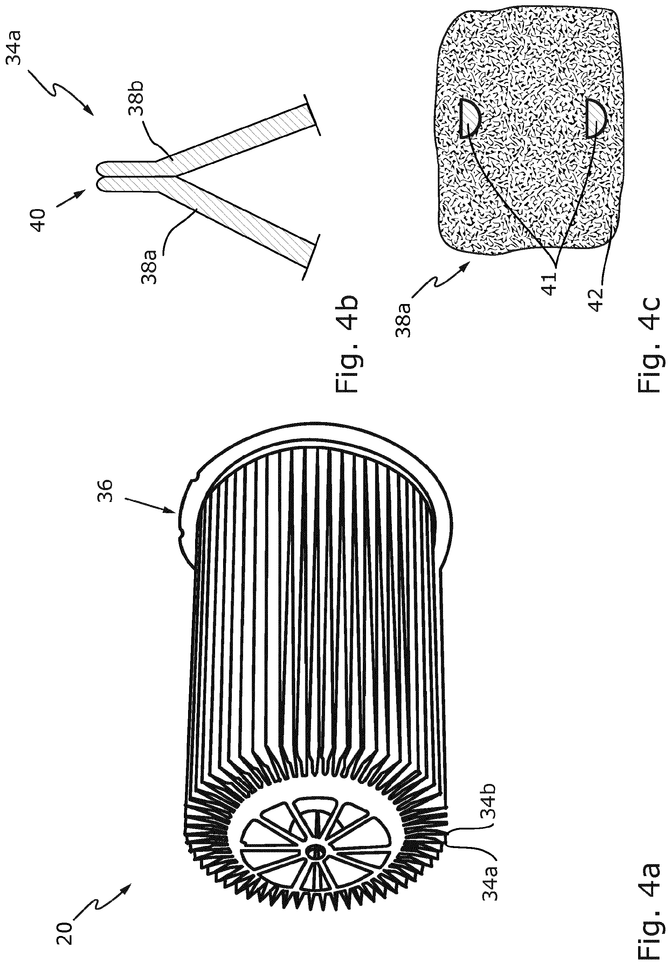

**Fig. 4a** zeigt ein Filterelement 20. Aus Fig. 4a ist ersichtlich, dass das Filterelement 20 in Form eines Rundfilterelements ausgebildet ist. Es weist eine Vielzahl sternförmig angeordneter, vorzugsweise mehrheitlich gleich ausgebildeter, Sintermetallfiltertaschen auf, von denen aus Gründen der Übersichtlichkeit nur die Sintermetallfiltertaschen **34a, 34b** mit einem Bezugszeichen versehen sind. Die Sintermetallfiltertaschen 34a, b sind axial zumindest einenends durch eine Endscheibe **36** gefasst. Im vorliegenden Fall ist das Filterelement 20 radial anströmbar, wobei der Gasstrom axial aus dem Filterelement 20 austritt.

**Fig. 4b** zeigt einen Teil eines Querschnitts der Sintermetallfiltertasche 34a aus Fig. 4a. Fig. 4b verdeutlicht, dass die Sintermetallfiltertasche 34a zwei gesinterte Metallblechstreifen **38a, 38b** aufweist. Die gesinterten Metallblechstreifen 38a, b weisen im Querschnitt des Filterelements 20 (siehe Fig. 4a) eine V-Form auf. Vorzugsweise sind die Metallblechstreifen 38a, b im Bereich ihrer Stirnseite **40** verbunden, insbesondere zusammengeschweißt oder zusammengelötet. Die beiden Metallblechstreifen 38a, b können im Bereich der Stirnseite 40 umgeschlagen sein (nicht gezeigt). Die Metallblechstreifen 38a, b können aus einem Träger mit einer Vielzahl von Öffnungen hergestellt sein, wobei in die Öffnungen gesinterte Metallpartikel eingebracht sind. Dies wird in Fig. 4c näher erläutert.

**Fig. 4c** zeigt eine mikroskopische Schnittansicht des gesinterten Metallblechstreifens 38a aus Fig. 4b. Aus Fig. 4c ist ersichtlich, dass der gesinterte Metallblechstreifen 38a einen Träger bzw. ein Skelett **41,** insbesondere aus Streckmetall, aufweist, wobei zwischen den Stegen des Skeletts 41 Sintermetallpartikel **42** angeordnet sind.

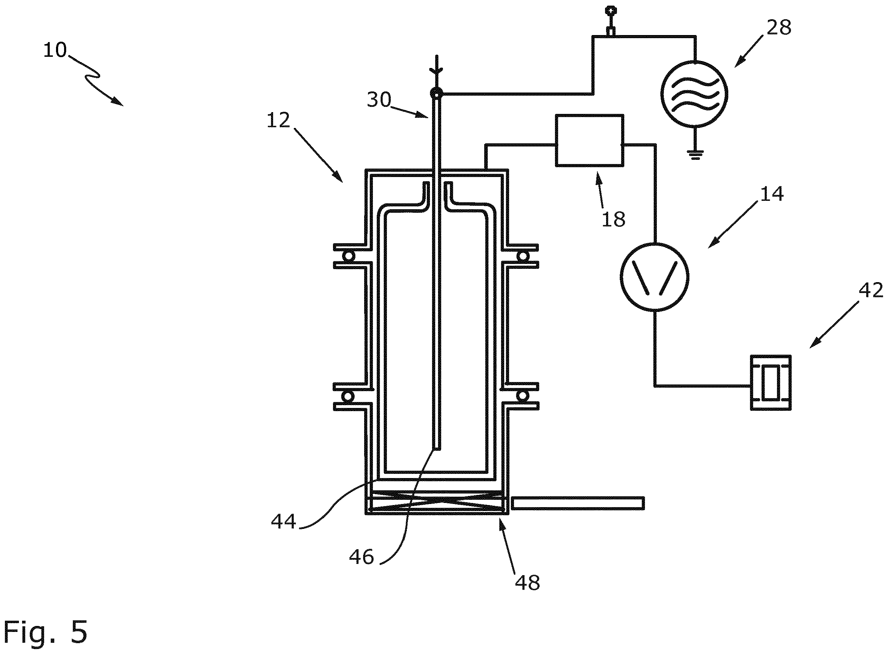

**Fig. 5** zeigt eine weitere Vakuumvorrichtung 10 mit einer Vakuumkammer 12, einer Vakuumpumpe 14 und einem Abgaspartikelfilter 18. Der Vakuumpumpe 14 ist ein Filter **43,** hier in Form eines Aktivkohlefilters, nachgeordnet.

Die Vakuumvorrichtung 10 ist zur Plasmabehandlung des Inneren eines Behältnisses **44,** hier in Form eines flaschenförmigen Behältnisses, ausgebildet. Ein Plasmagenerator 28 ist hierzu mit einer lanzenförmigen Elektrode 30 verbunden, die in das Behältnis 44 einführbar ist. Die Elektrode 30 kann vorzugsweise darüber hinaus zumindest eine Durchgangsöffnung **46** zur Einführung von Prozessgas aufweisen. Die Vakuumkammer 12 kann durch ein Kammerventil **48,** hier in Form eines Schieberventils, belüftbar sein.

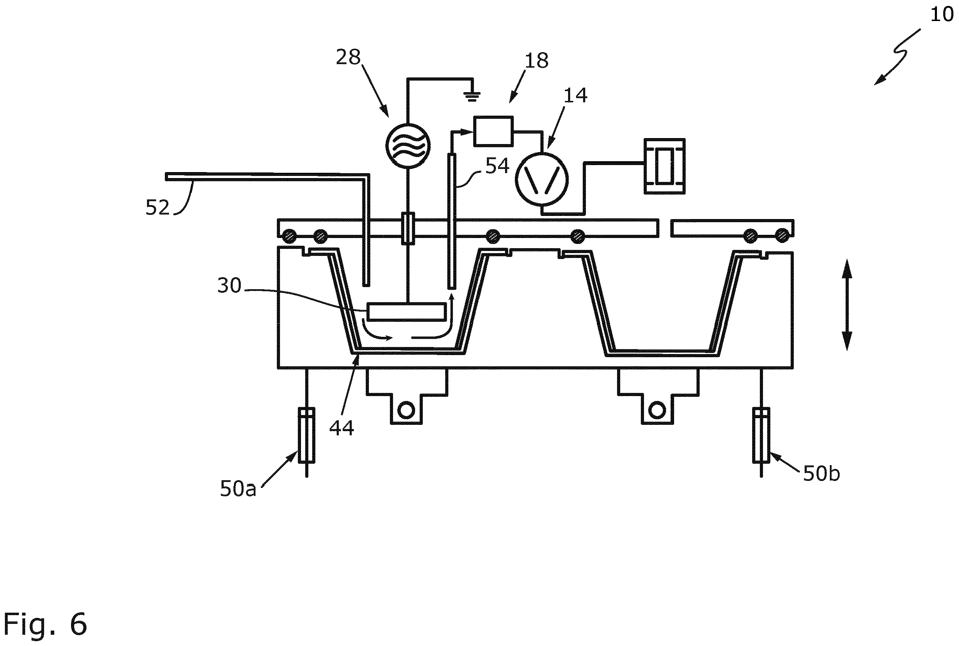

**Fig. 6** zeigt eine weitere Vakuumvorrichtung 10 zur Behandlung eines Behältnisses 44, hier in Form eines Bechers, beispielsweise eines Marmeladebechers. Die Vakuumvorrichtung 10 weist Zylinder **50a, 50b** zur schnellen Beladung und Entladung des Behältnisses 44 auf. Zur Beschichtung des Behältnisses 44 ist eine Medienzuführung **52** vorgesehen. Über die Medienzuführung 52 kann/können insbesondere Hexamethyldisiloxan (HMDSO), Hexamethyldisilazan (HMDSN), Ethin (Acetylen) und/oder Sauerstoff (O₂) zugeführt werden. Zur Plasmabehandlung, insbesondere Plasmabeschichtung, sind ein Plasmagenerator 28 und eine Elektrode 30 vorgesehen. Eine Medienabführung **54** mündet in einen Abgaspartikelfilter 18, der fluidisch vor einer Vakuumpumpe 14 angeordnet ist.

Unter Vornahme einer Zusammenschau aller Figuren der Zeichnung betrifft die Erfindung eine Vakuumvorrichtung 10 mit einer Vakuumkammer 12 und einer Vakuumpumpe 14 zur Evakuierung der Vakuumkammer 12. Die Vakuumvorrichtung 10 kann einen Plasmagenerator 28 aufweisen, um Behandlungsgut 16 in der Vakuumkammer 12 mit einem Plasma behandeln zu können. Der Vakuumpumpe 14 ist ein Abgaspartikelfilter 18 vorgeschaltet, um die Vakuumpumpe 14 vor aggressiven Reagenzien aus der Vakuumkammer 12 zu schützen. Der Abgaspartikelfilter 18 weist ein Filterelement 20 mit einer Vielzahl von Sintermetallfiltertaschen 34a, b auf. Die Sintermetallfiltertaschen 34a, b sind vorzugsweise jeweils aus zwei spitz zulaufenden gesinterten Metallblechstreifen 38a, b ausgebildet. Das Filterelement 20 kann als Elektrode 30 des Plasmagenerators 28 mit dem Plasmagenerator 28 verbunden sein. Die Erfindung betrifft weiterhin die Verwendung eines Abgaspartikelfilters 18 mit Sintermetallfiltertaschen 34a, b zum Schutz einer Vakuumpumpe 14.

### Bezuqszeichenliste

- 10: Vakuumvorrichtung
- 12: Vakuumkammer
- 14: Vakuumpumpe
- 16: Behandlungsgut
- 17: Partikel
- 18: Abgaspartikelfilter
- 20: Filterelement
- 22: Filtergehäuse
- 24: Pumpenventil
- 26: Belüftungsventil
- 28: Plasmagenerator
- 30: Elektrode
- 32: Isolator
- 34a, b: Sintermetallfiltertasche
- 36: Endscheibe
- 38a, b: gesinterter Metallblechstreifen
- 40: Stirnseite
- 41: Skelett
- 42: Sintermetallpartikel
- 43: Filter
- 44: Behältnis
- 46: Durchgangsöffnung
- 48: Kammerventil
- 50a, b: Zylinder
- 52: Medienzuführung
- 54: Medienabführung

## Patentansprüche

1. Vakuumvorrichtung (10), wobei die Vakuumvorrichtung (10) Folgendes aufweist:
a) Eine Vakuumkammer (12) zur Behandlung von Behandlungsgut (16);
b) eine fluidisch mit der Vakuumkammer (12) verbundene Vakuumpumpe (14) zur Erzeugung eines Unterdrucks in der Vakuumkammer (12);
**dadurch gekennzeichnet, dass** die Vakuumvorrichtung (10) Folgendes aufweist:
c) Ein der Vakuumpumpe (14) fluidisch vorgeschalteter Abgaspartikelfilter (18) mit einem Filterelement (20), wobei das Filterelement (20) mehrere Sintermetallfiltertaschen (34a, b) aufweist.

2. Vakuumvorrichtung nach Anspruch 1, bei der die Sintermetallfiltertaschen (34a, b) jeweils aus zwei gesinterten Metallblechstreifen (38a, b) bestehen, die im Bereich ihrer Stirnseite (40) verbunden, insbesondere verschweißt oder verlötet, sind.

3. Vakuumvorrichtung nach Anspruch 1 oder 2, bei der das Filterelement (20) in Form eines radial durchströmbaren Rundfilterelements mit im Querschnitt sternförmig angeordneten Sintermetallfiltertaschen (34a, b) ausgebildet ist.

4. Vakuumvorrichtung nach einem der vorhergehenden Ansprüche, bei der die Sintermetallfiltertaschen (34a, b) zum Zurückhalten von Partikeln (17) mit einer Größe von weniger als 1500nm, insbesondere mit einer Größe von weniger als 1000nm, vorzugsweise mit einer Größe von weniger als 500nm, ausgebildet sind.

5. Vakuumvorrichtung nach einem der vorhergehenden Ansprüche, bei der das Filterelement (20) im Inneren der Vakuumkammer (12) angeordnet ist.

6. Vakuumvorrichtung nach einem der vorhergehenden Ansprüche, bei der die Vakuumvorrichtung (10) einen Plasmagenerator (28) aufweist, wobei ein elektrisch leitfähiger Teil des Filterelements (20) elektrisch mit dem Plasmagenerator (28) verbunden ist, sodass das Filterelement (20) als Elektrode (30) des Plasmagenerators (28) einsetzbar ist.

7. Vakuumvorrichtung nach einem der vorhergehenden Ansprüche, bei der die Vakuumvorrichtung (10) einen Plasmagenerator (28) zum Zünden eines Plasmas in der Vakuumkammer (12) aufweist.

8. Vakuumvorrichtung nach Anspruch 7, bei der eine Elektrode (30) des Plasmagenerators (28) zur Einführung in ein zu behandelndes Behältnis (44) ausgebildet ist.

9. Vakuumvorrichtung nach Anspruch 7 oder 8, bei der die Elektrode (30) zumindest eine Durchgangsöffnung (46) zur Ausbildung einer Medienzuführung oder Medienabführung durch die Elektrode (30) aufweist.

10. Vakuumvorrichtung nach einem der vorhergehenden Ansprüche, bei der die Vakuumvorrichtung (10) im Bereich des Filterelements (20) eine Heizquelle zum Regenerieren des Filterelements (20) aufweist.

11. Vakuumvorrichtung nach einem der vorhergehenden Ansprüche, bei der die Vakuumvorrichtung (10) ein Belüftungsventil (26) aufweist, das fluidisch zwischen dem Abgaspartikelfilter (18) und der Vakuumpumpe (14) angeordnet ist.

12. Verwendung eines Abgaspartikelfilters (18) in einer Vakuumvorrichtung (10), wobei der Abgaspartikelfilter (18) ein Filterelement (20) mit mehreren Sintermetallfiltertaschen (34a, b) aufweist, **dadurch gekennzeichnet, dass** der Abgaspartikelfilter (18) fluidisch zwischen einer Vakuumkammer (12) und einer Vakuumpumpe (14) angeordnet ist.
